# FASCICULE DE BREVET EUROPEEN

(11) **EP 2 500 749 B1**
(45) Date de publication et mention de la délivrance du brevet: **01.06.2022**
(21) Numéro de dépôt: 12290073.1
(22) Date de dépôt: 05.03.2012
(51) Int. Cl.: G01S 13/74, G01S 13/04, F41H 11/16, F41H 11/136

(54) **Système intégré de lutte contre des engins explosifs improvisés**
Integriertes System zum Kampf gegen unbekannte Sprengvorrichtungen
Integrated system for fighting against improvised explosive devices

(30) Priorité: 17.03.2011 FR 1100810
(43) Date de publication de la demande: 19.09.2012
(73) Titulaire: MBDA France, 92350 Le Plessis-Robinson (FR)
(72) Inventeur: Hembise, Dominique, 78370 Plaisir (FR)
(74) Mandataire: Gevers & Orès

(56) Documents cités:
- WO-A2-2011/103066
- DE-A1-102006 038 627
- US-A- 4 053 891
- US-A- 6 163 259
- US-A1- 2009 135 046
- US-A1- 2009 182 525
- US-A1- 2010 289 686
- US-B1- 7 639 178
- US-B1- 7 864 107
- "Thor Directed Energy Weapon for Standoff Neutralization of IEDs and UXOs", , 23 June 2010 (2010-06-23), XP055186750, Retrieved from the Internet: URL:http://www.rafael.co.il/marketing/SIP_ STORAGE/FILES/5/795.pdf [retrieved on 2015-04-29]

## Description

La présente invention concerne un système intégré de lutte contre des engins explosifs improvisés.

Plus particulièrement, la présente invention concerne un système destiné à équiper un véhicule de manière à lui conférer une capacité de lutte contre des engins explosifs improvisés (IED en anglais pour « Improvised Explosive Device », ou EEI en français pour « Engins Explosifs Improvisés »), en particulier des engins EEI déposés par des terroristes dans des zones d'interventions de forces armées en théâtre d'opérations extérieures.

Un engin explosif improvisé est un engin positionné ou fabriqué de manière improvisée, qui comprend des composants chimiques explosifs, incendiaires ou toxiques. Il est conçu pour détruire, handicaper, ralentir et/ou distraire. Il peut incorporer des éléments provenant d'arsenaux militaires (par exemple une grenade), mais le plus souvent il est composé d'un assemblage de pièces non militaires. Un engin explosif improvisé comprend souvent une charge explosive, une charge d'amorçage, un détonateur et un système soit mécanique, soit électronique de mise à feu. Il existe de nombreux types d'engins explosifs improvisés, souvent assemblés à partir d'éléments hétéroclites.

Les engins explosifs improvisés destinés à réduire la mobilité des troupes sont le plus souvent posés sur les bas-côtés d'une route, dans une bande de moins de dix mètres, ou bien posés ou enfouis à faible profondeur sur une route ou une piste, empruntée par des véhicules militaires.

Ces engins sont déclenchés par une commande à distance de type radio, mais ils peuvent également comporter des capteurs susceptibles d'activer automatiquement la charge au passage de la cible, souvent après une commande d'armement hertzienne.

Un système intégré de lutte contre des engins EEI doit présenter notamment les caractéristiques suivantes :
- une portée qui doit être de plusieurs dizaines de mètres, pour assurer la sécurité du porteur vis-à-vis du rayon d'efficacité des charges qui est de plus en plus élevé ;
- une fiabilité de détection ; et
- une fiabilité élevée de destruction avec effet observable à distance.

Par le document US-2009/0182525, on connaît un système de détection, de localisation, et de destruction d'engins explosifs improvisés. Ce système, dont les éléments externes peuvent être montés sur une plate-forme, est agencé sous un hélicoptère afin de surveiller une zone terrestre située à l'avant de l'hélicoptère. Le système de détection comprend des moyens pour illuminer la zone surveillée par des micro-ondes et pour analyser les signaux renvoyés. En cas de détection de signaux renvoyés, il est nécessaire d'analyser le spectre de ces signaux renvoyés pour vérifier la présence d'engins explosifs improvisés. Et en cas de présence avérée d'un tel engin, il est nécessaire de déterminer exactement l'orientation des antennes utilisées pour émettre et recevoir le signal, afin de pouvoir localiser l'engin.

Ces opérations de détection, de vérification et de localisation d'engins explosifs improvisés sont relativement compliquées, et il est nécessaire de mette en œuvre des calculs pour confirmer une détection.

Par ailleurs, on connaît :
- par le document US-4 053 891, un système de détection et de localisation d'objet utilisant un détecteur de non-linéarités caractéristiques d'objets particuliers ;
- par le document US-2010/0289686, une méthode de perturbation ou de destruction d'un émetteur ou d'un récepteur d'un engin explosif improvisé ; et
- par le document US-7 864 107, un système de détection et de localisation d'un engin explosif improvisé.

La présente invention a pour objet de remédier aux inconvénients précités. Elle concerne un véhicule terrestre comprenant un système intégré de lutte contre des engins explosifs improvisés, pourvus de composants électroniques, ledit système comportant :
- des moyens de détection à distance de composants électroniques, munis au moins d'une antenne d'émission et d'une antenne de réception, lesdits moyens de détection représentant un système actif de type NLJD et étant destinés à détecter des jonctions non linéaires de composants électroniques, en permettant de détecter les harmoniques renvoyées par des jonctions non linéaires ;
- un bloc orientable, dans lequel sont fixés au moins les antennes d'émission et de réception desdits moyens de détection, qui sont dirigées de manière à illuminer au moins une même zone de l'espace ;
- des moyens de commande de l'orientation dudit bloc orientable, qui engendrent un déplacement dudit bloc orientable de manière à générer un balayage d'une partie de l'espace par lesdits moyens de détection ; et
- des moyens de neutralisation d'engins explosifs improvisés.

A cet effet, selon l'invention, ledit système est remarquable :
- en ce qu'il comporte, de plus :
   - une caméra de confirmation de détection qui est montée dans le bloc orientable et qui est dirigée vers la zone illuminée par lesdites antennes d'émission et de réception de manière à pouvoir former une image de cette zone ; et
   - des moyens pour afficher, sur un écran de visualisation, les images engendrées par ladite caméra de confirmation de détection, et des moyens de réglage manuel de l'échelle de l'affichage réalisé sur ledit écran de visualisation, ledit écran de visualisation et lesdits moyens de réglage étant déportés par rapport audit bloc orientable ;
- en ce qu'au moins des moyens de direction de tir desdits moyens de neutralisation sont également agencés sur ledit bloc orientable en étant dirigés, au moins dans une position de repos, vers la zone illuminée par lesdites antennes d'émission et de réception ; et
- en ce que ledit système actif de type NLJD est pulsé.

Ainsi, grâce à l'invention, la confirmation d'une détection peut être mise en œuvre facilement et simplement à l'aide d'une caméra de confirmation, comme précisé ci-dessous.

De plus, comme la caméra de confirmation est dirigée vers la zone illuminée par lesdites antennes d'émission et de réception et forme une image de cette zone, il n'est pas nécessaire de faire des calculs d'orientation et des réglages de pointage de la caméra pour réaliser la confirmation, qui peut donc être mise en œuvre de façon rapide. Pour augmenter la rapidité et la précision de la détection, la caméra de confirmation est dirigée, de préférence, vers le centre de la zone illuminée par lesdites antennes d'émission et de réception.

Avantageusement, ledit écran de visualisation et lesdits moyens de réglage (permettant de modifier le zoom des images affichées) qui sont déportés sont installés de préférence à l'intérieur d'un véhicule, équipé dudit système.

Avantageusement, lesdits moyens de commande de l'orientation dudit bloc orientable, engendrent un déplacement dudit bloc orientable de manière à obtenir un balayage à une vitesse de balayage constante.

Par ailleurs, avantageusement, lesdits moyens de détection sont formés de manière à détecter des jonctions non linéaires de composants électroniques. Dans un mode de réalisation préféré, lesdits moyens de détection comprennent :
- un émetteur de signal susceptible d'émettre au moins un signal puisé ;
- ladite antenne d'émission qui est reliée audit émetteur de signal ;
- un récepteur de signal susceptible de recevoir au moins des signaux pulsés renvoyés par des engins explosifs improvisés, pourvus de composants électroniques ;
- ladite antenne de réception qui est reliée audit récepteur de signal ; et
- une unité de commande et de traitement de signaux, qui est reliée audit émetteur de signal et audit récepteur de signal.

En outre, ladite antenne d'émission et ladite antenne de réception peuvent être montées sur ledit bloc orientable :
- soit côte à côte ;
- soit en tandem, ce qui permet de réduire le bruit parasite induit par le véhicule porteur dans l'antenne de réception, comme précisé ci-dessous.

Par ailleurs, le fait qu'au moins des moyens de direction de tir (canon, antenne) des moyens de neutralisation sont agencés sur le bloc orientable, en étant dirigés (au moins dans une position de repos) vers la zone illuminée par les antennes d'émission et de réception, permet de simplifier le système qui comporte un seul bloc orientable et des moyens de commande uniques de l'orientation dudit bloc.

En outre, avantageusement, lesdits moyens de neutralisation comprennent :
- un canon de type disrupteur ; ou
- un générateur de micro-ondes couplé à une antenne orientable.

Par ailleurs, avantageusement, lesdits moyens de détection comportent, de plus, des moyens de réglage de la fréquence fondamentale du signal, pour choisir une fréquence fondamentale, dont l'harmonique exacte n'est pas présente dans l'environnement d'utilisation.

La présente invention concerne un engin mobile comportant des moyens de lutte contre des engins explosifs improvisés.

Selon l'invention, ledit engin mobile est remarquable en ce que lesdits moyens de lutte comprennent le système intégré de lutte contre des engins explosifs improvisés, précisé ci-dessus.

De plus, selon l'invention, ledit engin mobile est un véhicule terrestre (c'est-à-dire roulant sur le sol), et ledit bloc du système intégré est monté sur le toit dudit véhicule terrestre et est agencé et commandé de manière à réaliser un balayage du sol à l'avant dudit véhicule terrestre.

En outre, selon l'invention, ledit engin mobile comporte des moyens pour émettre un signal d'alerte lorsque la vitesse courante dudit véhicule terrestre dépasse une vitesse de référence dépendant de la vitesse de balayage desdits moyens de détection, et une alarme avertissant un opérateur en cas de dépassement de la vitesse. Ceci permet d'assurer une détection efficace en prévoyant une vitesse de référence qui évite la présence de zones non balayées à l'avant du véhicule terrestre.

Les figures du dessin annexé feront bien comprendre comment l'invention peut être réalisée. Sur ces figures, des références identiques désignent des éléments semblables.

La figure 1 est le schéma synoptique d'un système intégré dans un véhicule terrestre conforme à l'invention.

La figure 2 montre schématiquement un bloc orientable d'un système intégré dans un véhicule terrestre conforme à l'invention.

La figure 3 montre schématiquement un véhicule porteur conforme à l'invention.

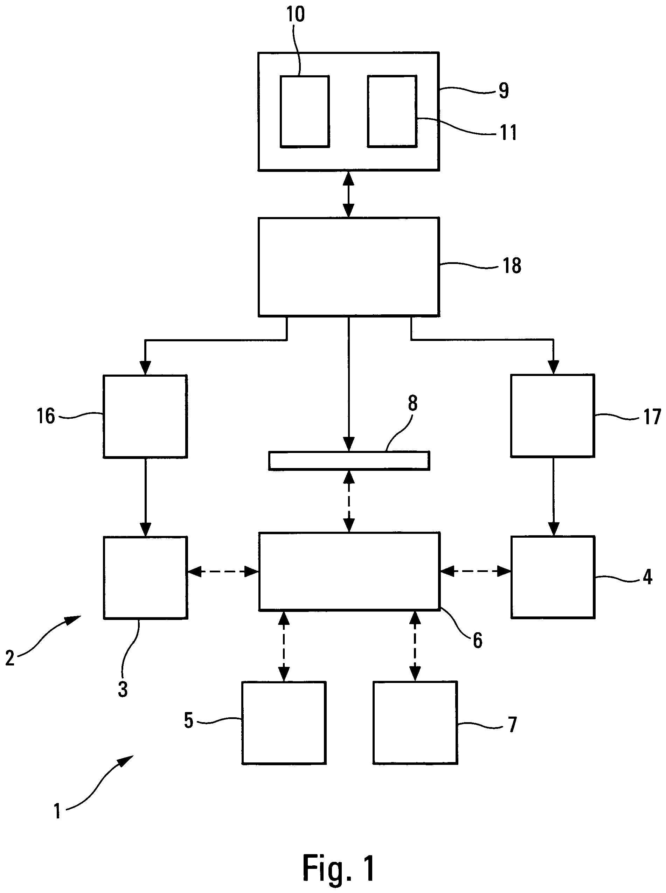

Le système 1 représenté schématiquement sur la figure 1 est un système intégré de lutte contre des engins explosifs improvisés (nommés IED en anglais pour « Improvised Explosive Device », et EEI en français pour « Engins Explosifs Improvisés »), pourvus de composants électroniques.

Ledit système 1 est destiné plus particulièrement, bien que non exclusivement, à lutter contre des engins EEI déposés par des terroristes dans des zones d'interventions de forces armées en théâtre d'opérations extérieures, et notamment des engins EEI posés sur les bas-côtés d'une route ou des engins EEI posés ou enfouis à faible profondeur sur une route ou une piste, empruntée par des véhicules militaires.

Pour ce faire, ledit système 1 comporte des moyens 2 de détection à distance de composants électroniques, munis d'une antenne d'émission 3 et d'une antenne de réception 4, ainsi que des moyens 5 de neutralisation d'engins explosifs improvisés.

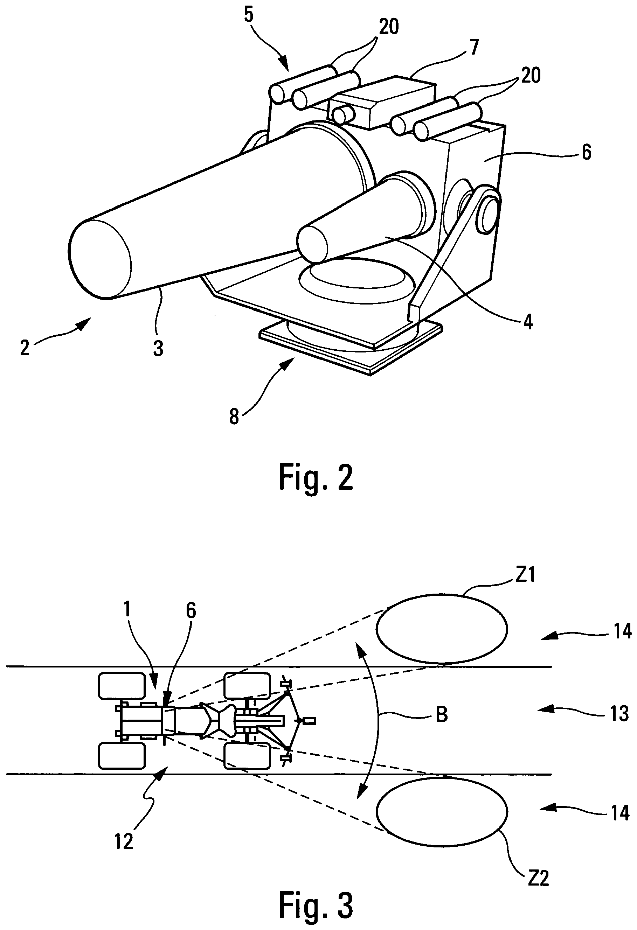

Selon l'invention, ledit système 1 comporte de plus, comme représenté sur la figure 2 :
- un bloc 6 qui est orientable en site et gisement, et dans lequel sont montés au moins
   - les antennes d'émission et de réception 3 et 4 desdits moyens de détection 2, qui sont dirigées de manière à illuminer une même zone Z1, Z2 du sol (figure 3) ; et
   - une caméra vidéo 7 de confirmation de détection qui est dirigée vers la zone Z1, Z2 illuminée par lesdites antennes d'émission et de réception 3 et 4 de manière à pouvoir former une image de cette zone Z1, Z2 ; et
- des moyens 8 de commande de l'orientation dudit bloc orientable 6, qui engendrent un déplacement dudit bloc orientable 6 de manière à générer un balayage d'une partie du sol par lesdits moyens de détection 2. Ce balayage qui est mis en œuvre entre deux positions extrêmes illustrées par les zones Z1 et Z2 est mis en évidence par une double flèche B sur la figure 3.

Ainsi, grâce à l'invention, la confirmation d'une détection peut être réalisée facilement et simplement à l'aide de la caméra de confirmation 7, comme précisé ci-dessous.

De plus, comme cette caméra 7 de confirmation de détection est dirigée vers la zone Z1, Z2 illuminée par lesdites antennes d'émission et de réception 3 et 4 et forme une image de cette zone Z1, Z2, il n'est pas nécessaire de faire des calculs d'orientation et des réglages importants de pointage de la caméra 7 pour réaliser la confirmation, qui peut donc être mise en oeuvre de façon rapide. De plus, l'image formée par la caméra 7 permet de localiser précisément un engin EEI détecté.

Pour augmenter la rapidité et la précision, ladite caméra 7 de confirmation de détection est dirigée, de préférence, vers le centre de la zone Z1, Z2 illuminée par lesdites antennes d'émission et de réception 3 et 4.

Lesdites antennes d'émission et de réception 3 et 4 et ladite caméra 7 de confirmation de détection sont de préférence fixées (selon la même orientation) dans le bloc 6. On peut également prévoir des moyens pour régler individuellement leurs directions de pointage respectives.

Dans un mode de réalisation préféré, ledit système 1 comporte, de plus, une interface homme/machine 9 qui comprend notamment un écran de visualisation 10 et des moyens 11 de réglage.

Cette interface homme/machine 9 peut notamment afficher, sur l'écran de visualisation 10, les images engendrées par ladite caméra 7 de confirmation de détection, et elle comporte des moyens (faisant par exemple partie des moyens 11) permettant à un opérateur de régler manuellement l'échelle de l'affichage réalisé sur ledit écran de visualisation 10 (dans le but de modifier le zoom des images affichées).

Ladite interface homme/machine 9 du système 1 est déportée par rapport audit bloc orientable 6, en étant de préférence installée à l'intérieur d'un véhicule 12, équipé dudit système 1.

Par ailleurs, lesdits moyens de détection 2 sont formés de manière à détecter des jonctions non linéaires de composants électroniques, ce qui réduit considérablement la probabilité de fausses alarmes. En effet, une analyse des menaces a révélée qu'une grande majorité d'engins EEI posés sur les routes 13 ou leurs bas-côtés 14 intègrent des circuits électroniques plus ou moins importants, soit pour leur armement, soit pour leur déclenchement à distance (ou par un capteur intégré à l'engin EEI). Or, dans les zones d'engagement prévus du système 1, les composés électroniques sont peu présents sur les routes 13 et les bas-côtés 14, de sorte qu'en cas de détection d'un composant électronique, la probabilité qu'il fasse partie d'un engin EEI est élevée.

Lesdits moyens de détection 2 représentent un système actif pulsé de type NLJD (« Non-Linear Junction Detector » en anglais) et sont destinés à détecter des jonctions non linéaires, en permettant de détecter les harmoniques renvoyées par des jonctions non linéaires présentes dans tout semi-conducteur comme les diodes ou les transistors.

Dans un mode de réalisation préféré, lesdits moyens de détection 2 comprennent :
- un émetteur de signal 16 susceptible d'émettre au moins un signal pulsé avec une fréquence fondamentale donnée ;
- ladite antenne d'émission 3 qui est reliée audit émetteur de signal 16;
- un récepteur de signal 17 susceptible de recevoir au moins des signaux pulsés renvoyés par des composants électroniques, notamment d'engins explosifs improvisés ;
- ladite antenne de réception 4 qui est reliée audit récepteur de signal 17 ; et
- une unité 18 de commande et de traitement de signaux, qui est reliée audit émetteur de signal 16 et audit récepteur de signal 17.

En plus d'un taux de fausses alarmes réduit, cette détection de composants électroniques présente également l'avantage d'autoriser une distance de détection de plusieurs dizaines de mètres, que l'on peut attendre d'un système actif pulsé permettant de détecter le signal réfléchi par la jonction PN de certains composants présents sur les cartes électroniques. En effet la réponse de la jonction est parfaitement prédictible :
- une jonction PN entre deux semi-conducteurs réfléchit le signal incident exactement à la fréquence de la seconde harmonique du signal initialement émis par l'antenne d'émission 3 ; et
- une jonction entre deux métaux conducteurs réfléchit le signal incident sur la troisième harmonique du signal initialement émis.

La détection d'un composant électronique comportant une jonction de semi-conducteur est effective dès que le récepteur 17 transmet à l'unité 18 de traitement de signaux un signal dont le rapport signal/bruit de fond est supérieur à un seuil prédéterminé, typiquement 20db.

La fréquence fondamentale émise par impulsions par l'antenne d'émission 3 est choisie de sorte que son harmonique exacte ne soit pas présente dans l'environnement d'utilisation. Pour remplir cette exigence opérationnelle, les moyens de détection 2 comportent, de plus, des moyens de réglage de la fréquence fondamentale du signal, qui font par exemple partie des moyens 11.

En particulier, pour que lesdits moyens de détection 2 puissent détecter des composants à une distance suffisante pour la sécurité du porteur, ces derniers présentent les caractéristiques suivantes :
- une puissance d'émission élevée, de l'ordre de 1kW ;
- une conception d'électronique d'émission et de réception à très faible niveau de bruit ; et
- un couple d'antennes d'émission et de réception 3 et 4 à très hautes sensibilités et très directives.

Les antennes d'émission et de réception 3 et 4 sont conçues pour être le plus directives possibles et ne pas être à l'origine de la génération d'harmoniques perturbateurs du fonctionnement du détecteur.

En outre, ladite antenne d'émission 3 et ladite antenne de réception 4 sont montées sur ledit bloc orientable 6 :
- soit côte à côte, comme représenté sur la figure 2 ;
- soit en tandem, c'est-à-dire l'une derrière l'autre (à distance suffisante l'une de l'autre).

Dans un montage en tandem (non représenté), l'antenne de réception qui est montée à l'avant peut ne pas réaliser de balayage, mais présenter un lobe plus large. Dans ce cas, seule l'antenne d'émission réalise un balayage, ce qui permet de réduire le bruit parasite induit par le véhicule porteur dans l'antenne de réception.

Comme indiqué ci-dessus, ledit système 1 comporte également des moyens 5 destinés à neutraliser (c'est-à-dire à détruire ou à mettre hors d'état de fonctionnement), tout engin EEI préalablement détecté et localisé. Au moins des moyens de direction de tir (canon, antenne) desdits moyens de neutralisation 5 sont également agencés sur le bloc orientable 6. Ces moyens sont, de préférence, dirigés vers la zone illuminée par lesdites antennes d'émission et de réception 3 et 4, ce qui facilite la neutralisation. De façon alternative ou en complément, on peut prévoir des moyens propres pour réaliser un pointage très précis des moyens de neutralisation 5.

Dans un mode de réalisation particulier, lesdits moyens de neutralisation 5 comprennent des canons 20 de type disrupteur.

De préférence, un tel canon est du type de ceux utilisés en pointage manuel par les groupes d'intervention sur les colis piégés. Il présente, par exemple, un calibre de 40 mm, et il tire des projectiles en matière molle, qui s'écrasent à l'impact sur la structure de l'engin EEI et lui transmettent la totalité de l'énergie cinétique. Le choc est d'un niveau tel qu'il démantèle les composants de l'engin EEI (cartes électroniques, batteries, fils et allumeurs), et l'engin EEI est alors neutralisé sans avoir fonctionné. Toutefois, même si l'engin EEI est activé par le choc, l'explosion a lieu à grande distance du véhicule 12 porteur du système 1, qui ne subit pas de dommages.

Dans un autre mode de réalisation (non représenté), lesdits moyens de neutralisation 5 comportent un générateur de micro-ondes de forte puissance, couplé à une antenne, mécaniquement pointable ou pilotable (du type à balayage de phase). Ce générateur de micro-ondes de forte puissance permet de détruire à distance l'électronique de l'engin EEI détecté.

Le fonctionnement du système 1 intégré dans le véhicule terrestre 12 conforme à l'invention qui est représenté schématiquement sur la figure 1, est le suivant :
- lors du déplacement du véhicule 12 porteur du système 1, les moyens 2 de détection à distance de composants électroniques, balaient le sol à l'avant dudit véhicule 12, en illuminant une zone de l'espace (entre Z1 et Z2) dans le but de détecter à distance des composants électroniques, pouvant faire partie d'engins EEI ;
- lors d'une détection (signalée de préférence par une alarme, visuelle et/ou sonore), l'image de la zone illuminée au moment de la détection s'affiche sur l'écran de visualisation 10 dans la cabine du véhicule 12, au moyen de la caméra 7 vidéo qui est solidaire du mouvement des deux antennes d'émission et de réception 3 et 4 ;
- le véhicule 12 stoppe alors, et une fois le véhicule arrêté, l'opérateur zoome la caméra 7 sur la zone concernée et la pilote en direct pour examiner visuellement l'origine de l'alarme avant de décider de traiter ou non l'objet à l'origine de cette alarme ;
- si la présence d'un engin EEI est avérée ou suspectée, il est neutralisé par un opérateur à l'aide des moyens de neutralisation 5.

Les technologies utilisées pour mettre en œuvre les fonctions précitées présentent, de préférence, des performances homogènes en termes de portée.

Un système 1 intégré dans le véhicule terrestre 12 conforme à l'invention présente notamment les caractéristiques suivantes :
- une portée de plusieurs dizaines de mètres, permettant d'assurer la sécurité du porteur vis-à-vis du rayon d'efficacité des charges qui est de plus en plus élevé ;
- une fiabilité de détection avec une faible probabilité de fausses alarmes ; et
- une fiabilité élevée de destruction avec effet observable à distance.

Comme indiqué ci-dessus, le système 1 de lutte contre des engins explosifs improvisés est monté sur un engin mobile.

Comme représenté schématiquement sur la figure 3, ledit engin mobile est un véhicule terrestre 12 (c'est-à-dire roulant sur le sol). Dans ce cas, de préférence, le bloc 6 dudit système 1, qui est orientable en site et gisement, est monté sur le toit dudit véhicule terrestre 12.

En outre, les deux antennes 3 et 4 sont orientées selon un site négatif et ledit bloc 6 est agencé et commandé de manière à engendrer un balayage du sol quelques dizaines de mètres à l'avant dudit véhicule terrestre 12.

Pour assurer une détection efficace, il est nécessaire que la vitesse de balayage des moyens de détection 2 et la vitesse du véhicule 12 soient choisies pour que le balayage du secteur balayé à l'avant du véhicule 12 empêche l'apparition de zones non scannées entre deux balayages successifs.

De préférence, le système 1 balaie la zone à l'avant du véhicule 12 à une vitesse angulaire constante, sur laquelle la vitesse maximale de progression dudit véhicule 12 est asservie. On prévoit une alarme pour avertir un opérateur lors du dépassement de cette vitesse maximale.

## Revendications

1. Véhicule terrestre (12) comportant des moyens de lutte contre des engins explosifs improvisés, lesdits moyens de lutte comprenant le système intégré (1) de lutte contre des engins explosifs improvisés pourvus de composants électroniques, ledit système (1) comportant :
- des moyens (2) de détection à distance de composants électroniques, munis au moins d'une antenne d'émission (3) et d'une antenne de réception (4), lesdits moyens de détection (2) représentant un système actif de type NLJD pulsé et étant destinés à détecter des jonctions non linéaires de composants électroniques, en permettant de détecter les harmoniques renvoyées par des jonctions non linéaires ;
- un bloc orientable (6), dans lequel sont fixés au moins les antennes d'émission et de réception (3, 4) desdits moyens de détection (2), qui sont dirigées de manière à illuminer au moins une même zone (Z1, Z2) de l'espace, ledit bloc (6) étant monté sur le toit dudit véhicule terrestre (12) et étant agencé et commandé de manière à réaliser un balayage du sol à l'avant dudit véhicule terrestre (12) ;
- des moyens (8) de commande de l'orientation dudit bloc orientable (6), qui engendrent un déplacement dudit bloc orientable (6) de manière à générer un balayage d'une partie de l'espace par lesdits moyens de détection (2) ;
- des moyens (5) de neutralisation d'engins explosifs improvisés, des moyens de direction de tir (20) desdits moyens de neutralisation (5) étant également agencés sur ledit bloc orientable (6) en étant dirigés, au moins dans une position de repos, vers la zone illuminée par lesdites antennes d'émission et de réception (3, 4) ;
- une caméra de confirmation de détection (7) qui est montée dans le bloc orientable (6) et qui est dirigée vers la zone (Z1, Z2) illuminée par lesdites antennes d'émission et de réception (3, 4) de manière à pouvoir former une image de cette zone (Z1, Z2) ; et
- des moyens (9) pour afficher, sur un écran de visualisation (10), les images engendrées par ladite caméra de confirmation de détection (7), et des moyens (11) de réglage manuel de l'échelle de l'affichage réalisé sur ledit écran de visualisation (10), ledit écran de visualisation (10) et lesdits moyens de réglage (11) étant déportés par rapport audit bloc orientable (6),
ledit véhicule terrestre (12) comportant des moyens pour émettre un signal d'alerte lorsque la vitesse courante du véhicule terrestre (12) dépasse une vitesse de référence dépendant de la vitesse de balayage desdits moyens de détection (2) et évitant la présence de zones non balayées à l'avant du véhicule terrestre (12).

2. Véhicule selon la revendication 1,
**caractérisé en ce que** ladite caméra de confirmation de détection (7) est dirigée vers le centre de la zone (Z1, Z2) illuminée par lesdites antennes d'émission et de réception (3, 4).

3. Véhicule selon l'une des revendications 1 et 2,
**caractérisé en ce que** lesdits moyens (8) de commande de l'orientation dudit bloc orientable (6), engendrent un déplacement dudit bloc orientable (6) de manière à obtenir un balayage à une vitesse de balayage constante.

4. Véhicule selon l'une quelconque des revendications 1 à 3,
**caractérisé en ce que** ladite antenne d'émission (3) et ladite antenne de réception (4) sont montées côte à côte sur ledit bloc orientable (6).

5. Véhicule selon l'une quelconque des revendications 1 à 3,
**caractérisé en ce que** ladite antenne d'émission (3) et ladite antenne de réception (4) sont montés en tandem sur ledit bloc orientable.

6. Véhicule selon l'une quelconque des revendications précédentes, **caractérisé en ce que** lesdits moyens de détection (2) comprennent :
- un émetteur de signal (16) susceptible d'émettre au moins un signal puisé ;
- ladite antenne d'émission (3) qui est reliée audit émetteur de signal (16) ;
- un récepteur de signal (17) susceptible de recevoir au moins des signaux pulsés renvoyés par des engins explosifs improvisés, pourvus de composants électroniques ;
- ladite antenne de réception (4) qui est reliée audit récepteur de signal (17) ; et
- une unité (18) de commande et de traitement de signaux, qui est reliée audit émetteur de signal (16) et audit récepteur de signal (17).

7. Véhicule selon l'une quelconque des revendications précédentes, **caractérisé en ce que** lesdits moyens de détection (2) comportent, de plus, des moyens (11) de réglage de la fréquence du signal.

8. Véhicule selon l'une quelconque des revendications 1 à 7,
**caractérisé en ce que** lesdits moyens de neutralisation (5) comprennent un canon (20) de type disrupteur.

9. Véhicule selon l'une quelconque des revendications 1 à 7,
**caractérisé en ce que** lesdits moyens de neutralisation (5) comprennent un générateur de micro-ondes couplé à une antenne orientable.

## Patentansprüche

1. Landfahrzeug (12), umfassend Mittel zur Bekämpfung von selbstgebauten Sprengkörpern, wobei die Bekämpfungsmittel das integrierte System (1) zur Bekämpfung von selbstgebauten, mit elektronischen Bauteilen versehenen Sprengkörpern umfasst, wobei das System (1) umfasst:
- Mittel (2) zur entfernten Erfassung von elektronischen Bauteilen, die mindestens mit einer Emissionsantenne (3) und einer Empfangsantenne (4) ausgerüstet sind, wobei die Erfassungsmittel (2) ein aktives System vom Typ des pulsierten NUD darstellen und dazu vorgesehen sind, nichtlineare Verbindungsstellen von elektronischen Bauteilen zu erfassen, indem erlaubt wird, die von den nichtlinearen Verbindungsstellen zurückgeworfenen Harmonischen zu erfassen;
- einen verstellbaren Block (6), in dem mindestens die Emissions- und die Empfangsantenne (3, 4) der Erfassungsmittel (2) befestigt sind, die derart ausgerichtet sind, dass sie mindestens einen selben Bereich (Z1, Z2) des Raums beleuchten, wobei der Block (6) auf dem Dach des Landfahrzeugs (12) montiert ist und derart angeordnet ist und gesteuert wird, dass eine Abtastung des Grunds vor dem Landfahrzeug (12) durchgeführt wird;
- Mittel (8) zum Steuern der Verstellung des verstellbaren Blocks (6), die eine Verschiebung des verstellbaren Blocks (6) derart erzeugen, dass eine Abtastung eines Teils des Raums durch die Erfassungsmittel (2) generiert wird;
- Mittel (5) zur Neutralisierung von selbstgebauten Sprengkörpern, wobei Mittel zum Ausrichten einer Schussabgabe (20) der Neutralisierungsmittel (5) ebenfalls auf dem verstellbaren Block (6) angeordnet sind, indem sie zumindest in einer Ruheposition in Richtung des von der Emissions- und der Empfangsantenne (3, 4) beleuchteten Bereichs gerichtet sind;
- eine Kamera zur Erfassungsbestätigung (7), die im verstellbaren Block (6) montiert ist und die derart in Richtung des von der Emissions- und der Empfangsantenne (3, 4) beleuchteten Bereichs (Z1, Z2) gerichtet ist, dass sie ein Bild dieses Bereichs (Z1, Z2) bilden kann; und
- Mittel (9) zum Anzeigen, auf einem Visualisierungsbildschirm (10), von Bildern, die von der Kamera zur Erfassungsbestätigung (7) erzeugt werden, und Mittel (11) zum manuellen Einstellen des auf dem Visualisierungsbildschirm (10) durchgeführten Anzeigemaßstabs, wobei der Visualisierungsbildschirm (10) und die Einstellungsmittel (11) in Bezug auf den verstellbaren Block (6) versetzt sind, wobei das Landfahrzeug (12) Mittel umfasst, um ein Warnsignal auszugeben, wenn die aktuelle Geschwindigkeit des Landfahrzeugs (12) eine Referenzgeschwindigkeit überschreitet, die von Abtastungsgeschwindigkeit der Erfassungsmittel (2) abhängt, und das Vorhandensein nicht abgetasteter Bereiche vor dem Landfahrzeug (12) vermeidet.

2. Fahrzeug nach Anspruch 1,
**dadurch gekennzeichnet, dass** die Kamera zur Erfassungsbestätigung (7) in Richtung der Mitte des von der Emissions- und Empfangsantenne (3, 4) beleuchteten Bereichs (Z1, Z2) gerichtet ist.

3. Fahrzeug nach einem der Ansprüche 1 und 2,
**dadurch gekennzeichnet, dass** die Mittel (8) zum Steuern der Verstellung des verstellbaren Blocks (6) derart eine Verschiebung des verstellbaren Blocks (6) erzeugen, dass eine Abtastung bei einer konstanten Abtastungsgeschwindigkeit erhalten wird.

4. Fahrzeug nach einem der Ansprüche 1 bis 3,
**dadurch gekennzeichnet, dass** die Emissions- (3) und Empfangsantenne (4) nebeneinander auf dem verstellbaren Block (6) montiert sind.

5. Fahrzeug nach einem der Ansprüche 1 bis 3,
**dadurch gekennzeichnet, dass** die Emissions- (3) und Empfangsantenne (4) im Tandem auf dem verstellbaren Block montiert sind.

6. Fahrzeug nach einem der vorstehenden Ansprüche, **dadurch gekennzeichnet, dass** die Erfassungsmittel (2) umfassen:
- einen Signalausgeber (16), der imstande ist, mindestens ein pulsiertes Signal auszugeben;
- die Emissionsantenne (3), die mit dem Signalausgeber (16) verbunden ist;
- der Signalempfänger (17), der imstande ist, mindestens pulsierte Signale zu empfangen, die von den selbstgebauten, mit elektronischen Bauteilen versehenen Sprengkörpern zurückgeworfen werden;
- die Empfangsantenne (4), die mit dem Signalempfänger (17) verbunden ist; und
- eine Einheit (18) zum Steuern und Verarbeiten von Signalen, die mit dem Signalausgeber (16) und dem Signalempfänger (17) verbunden ist.

7. Fahrzeug nach einem der vorstehenden Ansprüche,
**dadurch gekennzeichnet, dass** die Erfassungsmittel (2) außerdem Mittel (11) zum Einstellen der Frequenz des Signals umfassen.

8. Fahrzeug nach einem der Ansprüche 1 bis 7,
**dadurch gekennzeichnet, dass** die Neutralisierungsmittel (5) eine Kanone (20) vom Unterbrechungstyp umfassen.

9. Fahrzeug nach einem der Ansprüche 1 bis 7,
**dadurch gekennzeichnet, dass** die Neutralisierungsmittel (5) einen mit einer verstellbaren Antenne gekoppelten Mikrowellengenerator umfassen.

## Claims

1. Land vehicle (12) comprising means for combating improvised explosive devices, wherein said combating means comprise the integrated system (1) for combating improvised explosive devices provided with electronic components, said system (1) comprising:
- means (2) for remotely detecting electronic components, said means being provided with at least a transmission antenna (3) and a reception antenna (4), said detection means 2 representing an active pulsed system of the NLJD type and being intended to detect non-linear junctions of electronic components whilst allowing the detection of the harmonics returned by non-linear junctions;
- an orientable block (6) in which at least the transmission and reception antennas (3, 4) of said detection means (2) are mounted, which are directed so as to illuminate at least a same zone (Z1, Z2) of space, said block (6) being mounted on the roof of said land vehicle (12) and being arranged and controlled so as to carry out a scan of the ground in front of said land vehicle (12);
- means (8) for controlling the orientation of said orientable block (6), which cause a displacement of said orientable block (6) so as to generate a scan of part of space by said detection means (2); and
- means (5) for neutralising improvised explosive devices, means (20) for directing the firing of said neutralisation means (5) being also arranged on said orientable block (6) and being directed, at least in a rest position, toward the zone illuminated by said transmission and reception antennas (3, 4);
- a detection confirmation camera (7) which is mounted in the orientable block (6) and is directed toward the zone (Z1, Z2) illuminated by said transmission and reception antennas (3, 4) so as to be able to form an image of this zone (Z1, Z2); and
- means (9) for displaying, on a display screen (10), the images generated by said detection confirmation camera (7), and means (11) for manually adjusting the scale of the display shown on said display screen (10), said display screen (10) and said adjustment means (11) being remote from said orientable block (6),
said landing device (12) comprising means for transmitting a warning signal when the current speed of the land vehicle (12) exceeds a reference speed that depends on the scanning speed of said detection means (2) and prevents the presence of non-scanned zones in front of the land vehicle (12).

2. Vehicle according to claim 1,
**characterized in that** said detection confirmation camera (7) is directed toward the centre of the zone (Z1, Z2) illuminated by said transmission and reception antennas (3, 4).

3. Vehicle according to any of claims 1 and 2,
**characterized in that** said means (8) for controlling the orientation of said orientable block (6) cause a displacement of said orientable block (6) so as to obtain a scan at a constant scanning speed.

4. Vehicle according to any of claims 1 to 3,
**characterized in that** said transmission antenna (3) and said reception antenna (4) are mounted side by side on said orientable block (6).

5. Vehicle according to any of claims 1 to 3,
**characterized in that** said transmission antenna (3) and said reception antenna (4) are mounted in tandem on said orientable block (6).

6. Vehicle according to any of the precedent claims,
**characterized in that** said detection means (2) comprise:
- a signal transmitter (16) capable of transmitting at least a pulsed signal;
- said transmission antenna (3), which is connected to said signal transmitter (16);
- a signal receiver (17) capable of receiving at least pulsed signals returned by improvised explosive devices provided with electronic components;
- said reception antenna (4), which is connected to said signal receiver (17); and
- a signal control and processing unit (18), which is connected to said signal transmitter (16) and to said signal receiver (17).

7. Vehicle according to any of the precedent claims,
**characterized in that** said detection means (2) further comprise means (11) for adjusting the frequency of the signal.

8. Vehicle according to any of the claims 1 to 7,
**characterized in that** said neutralisation means (5) comprise a disruptor gun (20).

9. Vehicle according to any of the claims 1 to 7,
**characterized in that** said neutralisation means (5) comprise a microwave generator coupled to an orientable antenna.
